## Europäisches Patentamt

## European Patent Office

## Office européen des brevets

(11) Publication number: **0 051 969**
A1

# EUROPEAN PATENT APPLICATION

(21) Application number: **81305216.4**

(51) Int. Cl.³: **G 02 B 17/08**

(22) Date of filing: **03.11.81**

(30) Priority: **07.11.80 US 204968**
**10.11.80 US 205531**

(71) Applicant: **HONEYWELL INC., Honeywell Plaza, Minneapolis Minnesota 55408 (US)**

(72) Inventor: **Abel, Irving R., 22 Partridge Road, Lexington Massachusetts 02173 (US)**
Inventor: **Hatch, Marcus R., 36 River Street, Arlington Massachusetts 02174 (US)**

(74) Representative: **Riddle, John et al, Honeywell Control Systems Ltd. Patent Department Charles Square, Bracknell, Berks. (GB)**

(43) Date of publication of application: **19.05.82**
**Bulletin 82/20**

(84) Designated Contracting States: **CH DE GB IT LI**

(54) **Field curvature control in optical systems.**

(57) An optical system comprising a concave primary mirror (11) and a convex secondary mirror (12). The primary mirror converges radiation to the secondary mirror which has first and second surfaces (13, 14), the second surface being coated with reflective material. The radiation received by the mirror (12) is refracted at the first surface, reflected back from the second surface, and then refracted once again by the first surface, the first and second surfaces being shaped to provide control of field curvature of the optical system.

- 1 -

FIELD CURVATURE CONTROL IN OPTICAL SYSTEMS

BACKGROUND OF THE INVENTION

The present invention relates to control of field curvature in optical systems. The invention has application in optical systems generally and is particularly advantageous in compact cassegrainian arrangements.

It is particularly important in gimbal-mounted infrared sensor systems typical of, for example, missile born sensors that the system be extremely compact. In addition, it is important in such infrared systems to avoid field flatteners or separate lenses placed near the image for controlling field curvature; the infrared detector sees itself in any such lens and causes a cold spot in the system output because the detector area is cold. In addition, it is important that the system have a weight distribution providing a relatively small moment of inertia to minimize power requirements for rotating the system by the gimbals.

These requirements have been found to be particularly well satisfied by a concave primary mirror and a convex secondary mirror comprising a configuration often referred to as a cassegrainian arrangement. (The precise definition of cassegrain system is one where the primary mirror is specifically a parabola and the secondary mirror a hyperbola. However, systems comprising a concave primary mirror and a convex secondary mirror are now often referred to as cassegrainian systems without particular reference to the particular geometry of the mirrors). Two-mirror arrangements of this kind offer the maximum ratio of focal length to system length.

The compactness of such a configuration is improved as the primary mirror focal length is shortened requiring, as a consequence, a related decrease in the focal length of the secondary mirror. As this design feature is extended, such a system normally shows an increasing amount of field curvature arising from the disparity in the magnitude of radii of the primary and secondary mirrors.

In prior art systems, control of field curvature has typically been handled through use of field flatteners or additional lenses located within the system. See, for example, U.S. Patent No. 3,515,461. As previously mentioned, if such a field flattener or corrector is located near the image in an infrared system, it has a distinct disadvantage since the detector can see itself as a reflection in the correcting lens. In addition, systems having such additional lenses are heavier and more complex.

In systems where these factors are a problem, a particular feature of the present invention is the use of a mangin mirror having its surface shaped for providing control of field curvature without the use of special additional lenses.

Mangin mirrors have classically been used with spherical mirros to correct spherical aberrations. See, for example, the indicated disclosures within the following U.S. Patents: 2,730,013; 2,817,270; 3,064,526; 3,296,443 and 3,632,190.

See also Rogers, "A Comparison Between Optimized Spheric and Aspheric Optical Systems for the Thermal Infrared", SPIE Vol. 147, Computer-Aided Optical Design, 1978, pp. 141-148 (text at bottom of page 145).

(In addition, see U.S. Patent No. 3,527,526, which discloses use of a mangin in a cassegrainian arrangement for unspecified reasons).

The above patents however do not indicate use of a mangin type of mirror for providing control of field curvature. As previously indicated, the field curvature problem becomes more severe as the optical system is made more compact. However, inasmuch as a mangin mirror may also be defined as a lens having its back surface coated with reflective material, it can be uniquely applied to correct the amount of field curvature by controlling the particular shape or radii of mangin mirror surfaces. Thus, for any given objective system or subsystem, the particular field curvature field curvature correction may be established by a unique set of values for the two radii of the mangin mirror surfaces. Further, this can be accomplished as an integral part of one of the two mirrors in a two mirror system and, therefore, does not require supplementing such systems with additional corrector lenses.

According to the present invention, there is provided an optical system characterized in that an optical element includes mirror having a first and a second surface, the second surface being coated with reflective material, the radiation received by the lens being refracted at the first surface, reflected back from the second surface, and then refracted once again by the first surface, the first and second surfaces being shaped to provide control of field curvature.

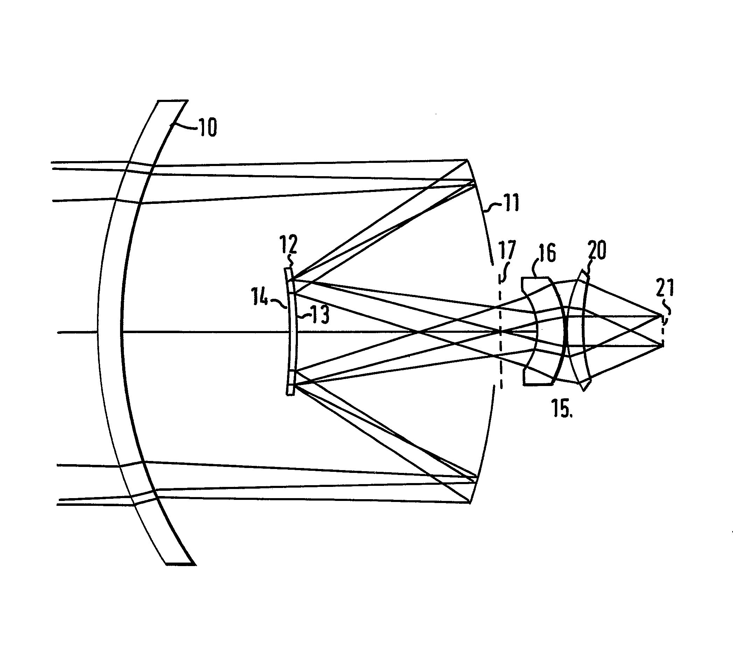

An embodiment of the invention will now be described by way of example only, with reference to the accompanying drawing, which is a diagrammatic view of an optical system according to the present invention.

Referring to the drawing, collimated radiation from a point in the scene is transmitted through a concentric dome window 10 with appropriate refractions at each surface. The beam is slightly divergent as it impinges upon a concave primary front surface mirror 11. It is then converged to a mangin secondary mirror 12 at which the radiation is refracted at a first surface of incidence 13, reflected from a back surface 14, and then refracted once again by the first surface.

Surfaces 13 and 14 are shaped to control field curvature. Mangin secondary mirror 12 also reduces convergence of the beam while reflecting it backward, the radiation being focused at a field stop 17. The radiation is then transmitted through collimator 15 comprising lenses 16 and 20 having appropriate refractions at each surface. Lenses 16 and 20 collimate the radiation and direct it through exit pupil 21.

- 4 -

In the optical system disclosed, mangin secondary mirror 12 only partially corrects field curvature, the field curvature being completely corrected following collimator 15 (lenses 16 and 20). However, in alternative embodiments, surfaces 13 and 14 of mirror 12 may be shaped to completely correct field curvature at field stop 17. Thus, mangin secondary mirror 12 may be employed to contribute whatever degree of field curvature is necessary to flatten the field or to control the field curvature to the desired flatness.

The field curvature contribution of mangin secondary mirror 12 is $1/R$ and may be defined by an equation $1/R = 2\left[(n-1)/r_1 + 1/r_2\right]/n$. In this equation, R is the radius of the field curvature, $n$ is the index of refraction of the mangin mirror lens, $r_1$ is the radius of the first surface (surface 13 in the disclosed embodiment), and $r_2$ is the radius of the second or back surface (surface 14 in the disclosed embodiment). Thus, once the material for the mangin mirror lens is selected, n is known from available references, and the radii of surfaces 13 and 14 can be calculated to provide any desired degree of field curvature control.

The first and second surfaces of mangin mirror 12 also allow one to select any combination of focusing power and field curvature contribution. For the normal situation in which the mangin mirror is thin, power of the mangin mirror is $1/f$ and may be defined by the equation $1/f = 2\left[n/r_2 - (n-1)/r_1\right]$. In this equation, $f$ is the focal length of the mangin mirror, $n$ is the index or refraction of the mangin mirror lens, $r_1$ is the radius of the first surface (surface 13 in the disclosed embodiment), and $r_2$ is the radius of the second or rear surface (surface 14 in the disclosed ambodiment).

Tables 1 and 2 set forth below give the dimensions and parameters of one preferred embodiment of the optical system.

- 5 -

## TABLE 1

SPECIFICATION-SYSTEM EXAMPLE

| Element | Radius milli-metres(mm) | Thickness milli-metres(mm) | Material | Conic Constant |
|---|---|---|---|---|
| Dome 10 | 152.40 | 7.62 | Zinc Sulfide | |
| | 144.78 | 121.92 | | |
| Primary Mirror 11 | -182.02 | -64.90 | Aluminum | -.75102 |
| Secondary Mirror 12 | -171.65 | -2.54 | Germanium | |
| | -139.07* | 2.54 | | -4.7 |
| Field Stop 17 | | 64.90 | | |
| | | 12.73 | | |
| Collimator Lens 16 | -20.78 | 10.19 | Germanium | |
| | -26.60 | .25 | | |
| Collimator Lens 20 | 39.22 | 5.08 | Germanium | -.3565 |
| | 59.44 | | | |
| Exit Pupil 21 | | 26.42 | | |

* Surface is Aspheric:

$$\text{Sag} = \frac{\frac{y^2}{r}}{1 + \sqrt{1 - (K + 1)\frac{y^2}{r^2}}} + dy^4 + ey^6 + fy^8$$

where

$d = 2.213 \times 10^{-3}$     $y$ = Aperture height

$e = -1.459 \times 10^{-3}$     $r$ = Radius of the surface

$f = 4.591 \times 10^{-4}$     $k$ = Conic Constant

- 6 -

## TABLE 2

### EXAMPLE SYSTEM PARAMETERS

| | |
|---|---|
| Telescope Magnification | 11.9 |
| External Field of View | $2.38^{\circ}$ x $3.22^{\circ}$ |
| Entrance Pupil Diameter | 111.76 mm |
| Objective F-Number | 2.0 |
| Objective Focal Length | 224.79 mm |
| Collimator Focal Length | 18.90 mm |

Table 1 is laid out in a manner common in the art; if more than one dimension is given for an element, the dimensions appear in the order that light travels from the scene through the system. For example, for dome 10, the first radius listed of 152.44 mm corresponds to the first surface of dome 10, and the radius of 144.78 mm corresponds to the second surface of dome 10.

In the thickness column of Table 1, the numbers include on-axis air space thicknesses listed in the order in which light travels through the system. Accordingly, the first number of 7.62 mm is the thickness of dome 10. The second number of 121.92 mm corresponds to the on-axis distance between the second surface of dome 10 and a point that would intersect the radius of the reflective front surface of primary mirror 11. The minus sign associated with the first dimension of 64.90 mm indicates light travelling in a backward direction. The 2.54 mm number listed in association with mangin secondary mirror 12 indicates the thickness of the mirror, the first number being negative since light is travelling in the reverse direction in its first transit to the reflective back surface 14 of that mirror. The positive 64.90 mm dimension is the air space distance between first surface 13 of mirror 12 and field stop 17, which is the first focal plane. The dimension of 12.73 mm is the distance between field stop 17 and the first surface of lens 16 within collimator 15. The 10.19 mm dimension listed in association with collimator lens 16 is the thickness of that lens, the 2.54 mm dimension being the air space thickness between the second surface of lens 16 and the first surface of lens 20. The 5.08 mm dimension listed in association with lens 20 is the thickness of that lens, the 26.42 mm dimension being the distance between the second surface of lens 20 and exit pupil 21.

It should be noted that, while the mangin mirror has been shown as a secondary mirror in the disclosed embodiment, the secondary mirror could be a front surface mirror, and the primary mirror could be a mangin mirror with first and second surfaces shaped for providing control of field curvature. Alternately, both mirrors could be mangin mirrors with one or both having surfaces so shaped.

Further, although mirror 12 comprising the present invention is disclosed as aspheric (see Table 1), a mangin mirror comprising the present invention may also be spherical.

In addition, while primary mirror 11 is disclosed as having an aperture for transmission of radiation reflected from secondary mirror 12, the system could be configured without the aperture and with secondary mirror 12 reflecting radiation past the edge of primary mirror 11.

Compactness of a cassegrainian system can be quantized by a ratio of the system physical length divided by the system focal length. For the embodiment disclosed in Tables 1 and 2, that ratio is 0.30 which is obtained by dividing 67.44 mm (2.54mm plus 64.90 mm) by 224.79 mm; in this calculation, 2.54 mm is the thickness of mangin secondary mirror 12, 64.90 mm is the air space distance between the first surface of mirror 12 and field stop 17 (the first image), and 224.79 mm is the objective focal length.

- 8 -

CLAIMS

1. An optical system characterized in that an optical element includes mirror (12) having a first (13) and a second surface (14), the second surface being coated with reflective material, the radiation received by the lens being refracted at the first surface, reflected back from the second surface, and then refracted once again by the first surface, the first and second surfaces being shaped to provide control fo field curvature.

2. The optical system of Claim 1, characterized by a concave primary mirror (11) and a convex secondary mirror (12), the primary mirror converging radiation also the secondary mirror, said optical element consisting one or other of said primary or secondary mirrors.

3. The optical system of Claim 1 or 2, characterized in that the first (13) and second (14) surfaces each have a radius defined by the equation $1/R = 2 \left[ (n-1)/r_1 + 1/r_2 \right]/n$, where R is the radius of the field curvature, $n$ is the index of refraction of the lens, $r_1$ is the radius of the first surface, and $r_2$ is the radius of the second surface.

4. The optical system of Claim 3, characterized in that the power of the optical element is $1/f$ and is defined by the equation $1/f = \left[ 2\, n/r_2 - (n-1)r_1 \right]$ wherein $f$ is the focal length of the mangin mirror, $n$ is the index of refraction of the lens, $r_1$ is the radius of the first surface, and $r_2$ is the radius of the second surface.

5. The optical system of Claim 2 or Claim 3 or 4 as appendant to Claim 2 characterized in that one or both of mirrors (11 and 12) are aspheric.

6. The optical system of any one of the preceding claims wherein system compactness measured by the ratio $\dfrac{\text{system physical length}}{\text{system focal length}}$ is approximately 0.3.

7.  The optical system of Claim 2 or any of Claims 3 to
    6 as appendant to Claim 2, wherein the primary mirror
    has an aperture for transmission of radiation reflected
    from the secondary mirror.

0051969

European Patent Office

**EUROPEAN SEARCH REPORT**

Application number

EP 81 30 5216

| | DOCUMENTS CONSIDERED TO BE RELEVANT | | CLASSIFICATION OF THE APPLICATION (Int. Cl. ³) |
|---|---|---|---|
| Category | Citation of document with indication, where appropriate, of relevant passages | Relevant to claim | |
| Y | <u>FR - A - 2 355 305</u> (R.E.O.S.C.)<br><br>* claims 1,2,5,10; figures 2,3 *<br><br>-- | 1,2,5 | G 02 B 17/08 |
| Y | <u>GB - A - 2 030 315</u> (PILKINGTON)<br><br>* abstract; figures * | 1,2 | |
| | ---------- | | **TECHNICAL FIELDS SEARCHED (Int.Cl. ³)**<br><br>G 02 B 17/08<br>17/00 |

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| | The present search report has been drawn up for all claims | |
|---|---|---|
| Place of search | Date of completion of the search | Examiner |
| The Hague | 08-02-1982 | PFÄHLER |

EPO Form 1503.1 06.78